# EUROPEAN PATENT SPECIFICATION

(11) **EP 3 073 379 B1**
(45) Date of publication and mention of the grant of the patent: **08.05.2019**
(21) Application number: 15853644.1
(22) Date of filing: 05.11.2015
(51) Int. Cl.: G06F 11/14, G06F 11/16, G06F 11/20

(54) **FIRMWARE RECOVERY METHOD, DEVICE AND TERMINAL**
VERFAHREN, VORRICHTUNG UND ENDGERÄT ZUR WIEDERHERSTELLUNG EINES FIRMWARE-PROGRAMMS
PROCÉDÉ, DISPOSITIF ET TERMINAL DE RÉCUPÉRATION DE MICROLOGICIEL

(30) Priority: 22.12.2014 CN 201410806750
(43) Date of publication of application: 28.09.2016
(73) Proprietor: Xiaomi Inc., Beijing 100085 (CN)
(72) Inventor: MENG, Deguo, Beijing 100085 (CN); LIANG, Yue, Beijing 100085 (CN); HOU, Enxing, Beijing 100085 (CN)
(74) Representative: Sadler, Peter Frederick
(86) International application number: PCT/CN2015/093856
(87) International publication number: WO 2016/101712

(56) References cited:
- EP-A1- 0 936 548
- CN-A- 103 019 833
- CN-A- 103 116 501
- CN-A- 104 536 848
- JP-A- 2000 039 993
- US-A1- 2002 091 919
- US-A1- 2003 131 180
- US-A1- 2003 191 930
- US-A1- 2004 172 578
- US-A1- 2010 180 108
- US-A1- 2012 110 378

## Description

### TECHNICAL FIELD

The present disclosure generally relates to the technical field of electronic devices, and more particularly, to a method, a device and a terminal for restoring a firmware program.

### BACKGROUND

Firmware refers to software functioning at the bottom layer of an electronic device to support the normal operation of the electronic device. Typically, when firmware in the electronic device fails, the firmware is required to be restored.

To restore firmware in an electronic device, a user normally has to connect the electronic device to a flash tool, and a new firmware program will be written into the electronic device by the flash tool to restore the firmware.

European patent application EP 0936548 describe a computer system that includes system memory, containing BIOS instructions, having multiple bootable partitions and the ability to enable Automatic System Recovery (ASR) protection during an early phase of the boot process. The multiple BIOS partitions allows a user to upgrade and/or test new system routines without the potential of losing the functionality of their existing system.

US patent application US 2003/0131180 describes a device for use in a network environment equipped for upgrading system files, such as OS kernel, device drivers, network stacks and/or remote upgrade/install application, comprising a non-volatile memory, including: a first non-volatile memory area for storing a copy of the system files; a second non-volatile memory area for storing another copy of the system files; a third non-volatile memory area for storing one or more boot files for booting the device using the system files that are stored in either the first memory (11) or the second memory. The memory areas can be updated from server.

US patent application US 2003/191930 describes a boot loader for a device comprising an IP stack supporting Internet protocols, and a scripting engine to run a default script. The IP stack includes address discovery service (for example, BOOTP and DHCP), a URI to IP address translator (for example, DNS), and a protocol for file transfer over the Internet (for example, HTTP, FTP and/or TFTP). On start-up of the device, the boot loader runs the default script to initialize the device and verify the integrity of any data and operating systems in memory on the device.

US patent application US 2002/091919 describes a method for selecting a code image to execute. Multiple copies of a code image are maintained in a non-volatile memory device. A first operation routine is executed. A first counter is incremented if the first operation routine succeeds. A second operation routine is executed and a second counter is incremented if the second operation routine succeeds. The first and second counters are used to select one of the code images from the memory device to execute.

### SUMMARY

The present disclosure provides a method, a device and a terminal for restoring a firmware program. The technical solution is as follows.

According to a first aspect of embodiments of the present disclosure, there is provided a method for restoring a firmware program in a terminal having an activated first storage region for storing a firmware program most recently executed by the terminal and an inactivated second storage region for storing a back-up firmware program, the method including:
upon receiving a restoring signal for restoring a firmware program in the terminal:
deactivating the first storage region and activating the second storage region; and
loading the firmware program stored in the activated second storage region.

The method further includes:
sending to a server a request for acquiring an up-to-date firmware program of the terminal;
receiving the up-to-date firmware program returned by the server;
determining states of the first storage region and the second storage region;
if the first storage region is activated and the second storage region is inactivated, updating a firmware program stored in the inactivated second storage region with the up-to-date firmware program; deactivating the first storage region and activating the second storage region; and
if the second storage region is activated and the first storage region is inactivated, updating a firmware program stored in the inactivated first storage region with the up-to-date firmware program; deactivating the second storage region and activating the first storage region.

Deactivating the first storage region and activating the second storage region includes:
acquiring a first storage address of the first storage region and a second storage address of the second storage region;
deactivating a storage region corresponding to the first storage address; and
activating a storage region corresponding to the second storage address.

Optionally, acquiring a first storage address of the first storage region and a second storage address of the second storage region includes:
retrieving a partition table containing storage addresses of storage regions; and
determining the first storage address and the second storage address based on the partition table.

Activating a storage region corresponding to the second storage address includes:
when there are two or more second storage addresses, selecting one of the second storage addresses according to a preset condition, the preset condition including at least one of: priority levels of the second storage regions respectively corresponding to the second storage addresses, intactness/completeness of firmware programs respectively stored in the second storage regions, and version numbers of the firmware programs respectively stored in the second storage regions; and
activating a second storage region corresponding to the selected second storage address.

According to a second aspect of embodiments of the present disclosure, there is provided a device for restoring a firmware program in a terminal having an activated first storage region for storing a firmware program most recently executed by the terminal and an inactivated second storage region for storing a back-up firmware program, the device including:
a signal receiving module configured to receive a restoring signal for restoring a firmware program in the terminal;
a first processing module configured to deactivate the first storage region and activate the second storage region; and
a firmware loading module configured to load the firmware program stored in the activated second storage region.
the device further includes:
   a request sending module configured to send to a server a request for acquiring an up-to-date firmware program of the terminal;
   a firmware receiving module configured to receive the up-to-date firmware program returned by the server;
   a state determining module configured to determine states of the first storage region and the second storage region;
   a first update module configured to, if the first storage region is activated and the second storage region is inactivated, update a firmware program stored in the inactivated second storage region with the up-to-date firmware program received by the firmware receiving module; deactivate the first storage region and activate the second storage region; and
   a second update module configured to, if the second storage region is activated and the first storage region is inactivated, update a firmware program stored in the inactivated first storage region with the up-to-date firmware program; deactivate the second storage region and activate the first storage region.

The first processing module includes:
an address acquiring sub-module configured to acquire a first storage address of the first storage region and a second storage address of the second storage region;
a deactivating sub-module configured to deactivate a storage region corresponding to the first storage address; and
an activating sub-module configured to activate a storage region corresponding to the second storage address.

Optionally, the address acquiring sub-module is configured to:
retrieve a partition table containing storage addresses of storage regions; and
determine the first storage address and the second storage address based on the partition table.

The activating sub-module is configured to:
when there are two or more second storage addresses, select one of the second storage addresses according to a preset condition, the preset condition including at least one of: priority levels of the second storage regions respectively corresponding to the second storage addresses, intactness of firmware programs respectively stored in the second storage regions, and version numbers of the firmware programs respectively stored in the second storage regions; and
activate a second storage region corresponding to the selected second storage address.

According to a third aspect of embodiments of the present disclosure, there is provided a terminal including an activated first storage region for storing a firmware program most recently executed by the terminal and an inactivated second storage region for storing a back-up firmware program, the terminal further includes:
a processor; and
a memory for storing instructions executable by the processor;
wherein, when executed, the instructions cause the processor to perform any of the methods according to the first aspect.

The technical scheme according to embodiments of the present disclosure may have the following beneficial effects.

An activated first storage region for storing a firmware program most recently executed by the terminal and an inactivated second storage region for storing a back-up firmware program are provided in a terminal. Thereby, in order to restore a firmware program as desired, the terminal can simply deactivate the first storage region, activate the second storage region, and load the back-up firmware program stored in the activated second storage region. Thus, it can solve the problem in the related art that a firmware program can be restored only by a flash tool, and it can achieve an effect of restoring a firmware program with one key and facilitating operation of the user.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating an implementation environment involved in a method for restoring a firmware program according to part of the exemplary embodiments.
Fig. 2 is a block diagram illustrating a terminal according to an exemplary embodiment.
Fig. 3 is a flow chart illustrating a method for restoring a firmware program according to an exemplary embodiment.
Fig. 4A is a flow chart illustrating a method for restoring a firmware program according to another exemplary embodiment.
Fig. 4B is a flow chart illustrating a process for a terminal acquiring a first storage address and a second storage address according to another exemplary embodiment.
Fig. 4C is a flow chart illustrating a terminal activating a second storage region according to another exemplary embodiment.
Fig. 4D is a flow chart illustrating a terminal updating a firmware program according to another exemplary embodiment.
Fig. 4E is another flow chart illustrating a method for restoring a firmware program according to another exemplary embodiment.
Fig. 4F is still another flow chart illustrating a method for restoring a firmware program according to another exemplary embodiment.
Fig. 5 is a block diagram illustrating a device for restoring a firmware program according to an exemplary embodiment.
Fig. 6 is a block diagram illustrating a device for restoring a firmware program according to another exemplary embodiment.
Fig. 7 is a block diagram illustrating a device for restoring a firmware program according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

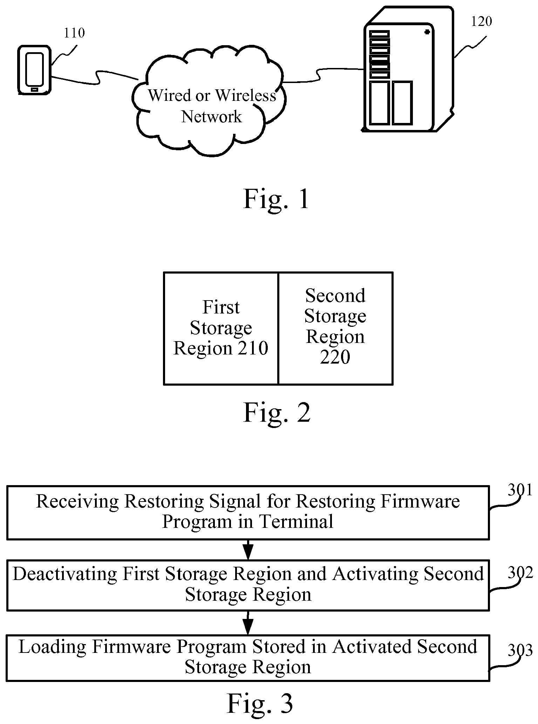

Fig. 1 is a schematic diagram illustrating an implementation environment involved in a method for restoring a firmware program according to the exemplary embodiments of the present disclosure. As shown in Fig. 1, the implementation environment can include a terminal 110 and a server 120.

The terminal 110 is a terminal such as a mobile phone, a tablet computer, an e-book reader, a desktop computer, a notebook computer, a digital camera, a router, switching equipment, a printer, a main board, a game console or the like. The terminal 110 can be connected to the server 120 via a wired or wireless network.

The network 120 can include one or more high performance computers or a cloud computer center. The server 120 is configured to provide service for the terminal 110.

As shown in Fig. 2, the terminal 110 can include an activated first storage region 210 for storing a firmware program most recently executed by the terminal and an inactivated second storage region 220 for storing a back-up firmware program.

Optionally, the first storage region 210 and the second storage region 220 can be two storage regions in a built-in memory of the terminal. For example, the first storage region 210 and the second storage region 220 can be two storage regions in a flash memory.

Optionally, the firmware program stored in the first storage region 210 can have a version number same as or different from that of the back-up firmware program stored in the second storage region 220.

For example, the firmware program stored in the first storage region 210 is a 3.2 version, and the back-up firmware program stored in the second storage region 220 is a version distributed earlier, such as a 3.1 version. However, the first storage region 210 and the second storage region 220 can store the same version, such as a 3.2 version. This is not limited in the present embodiment.

Optionally, the first storage region 210 can have a size same as or different from that of the second storage region 220. Optionally, the first storage region 210 and the second storage region 220 can be generally implemented as having the same size.

Optionally, there can be provided one, two or more second storage regions 220. This is not limited in the present embodiments. Optionally, to save storage resources of the terminal and further improve utilization of the resources of the terminal, one second storage regions 220 is generally provided.

Fig. 3 is a flow chart illustrating a method for restoring a firmware program according to an exemplary embodiment. As shown in Fig. 3, in the present embodiment, the method for restoring a firmware program can be applied in the terminal 110 as shown in Fig. 1, for example. The method for restoring a firmware program can include the following steps.

In step 301, a restoring signal for restoring a firmware program in the terminal is received.

In step 302, the first storage region is deactivated and the second storage region is activated.

In step 303, the firmware program stored in the activated second storage region is loaded.

Accordingly, in the method for restoring a firmware program provided in the embodiment of the present disclosure, an activated first storage region for storing a firmware program most recently executed by the terminal and an inactivated second storage region for storing a back-up firmware program are provided in a terminal. Thereby, in order to restore a firmware program as desired, the terminal can simply deactivate the first storage region, activate the second storage region, and load the back-up firmware program stored in the activated second storage region. Thus, it can solve the problem in the related art that a firmware program can be restored only by a flash tool, and it can achieve an effect of restoring a firmware program with one key and facilitating operation of the user.

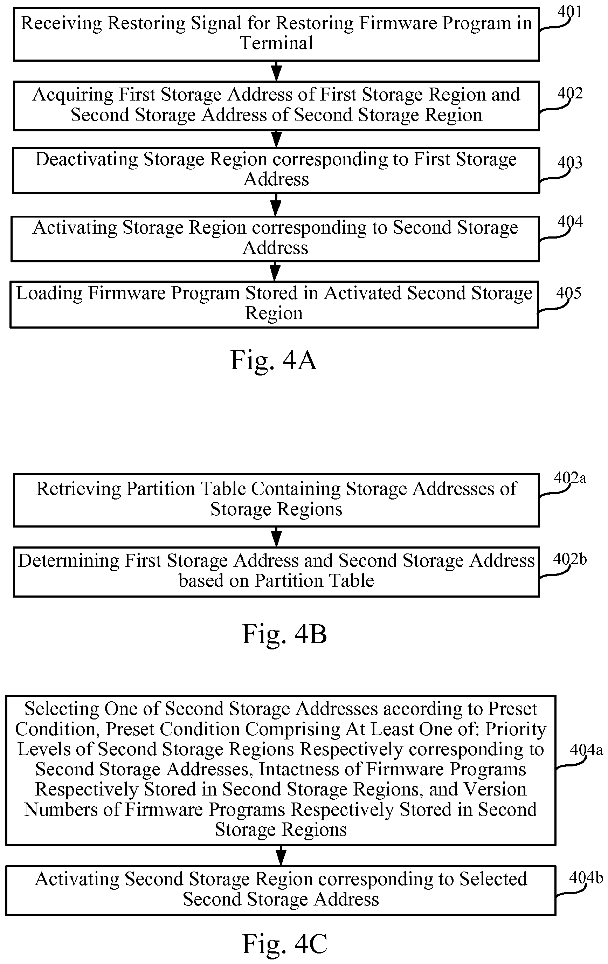

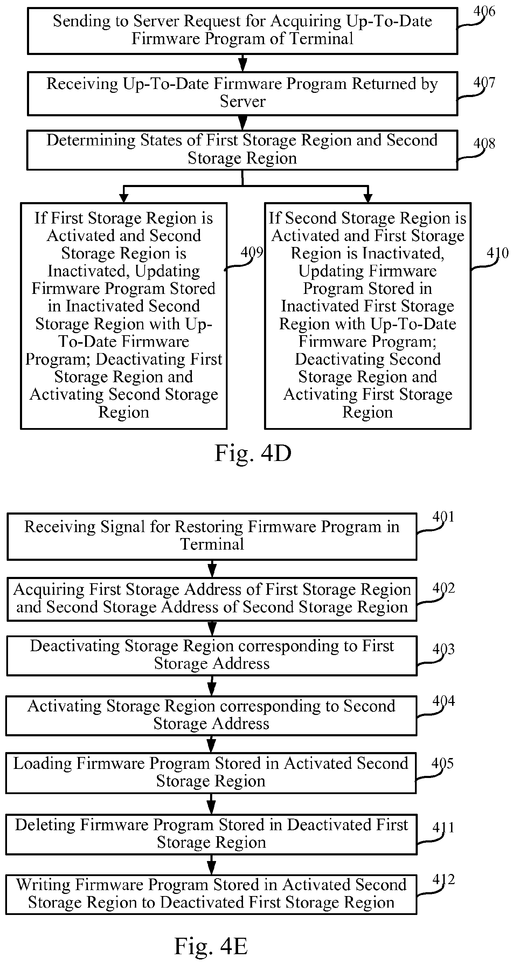

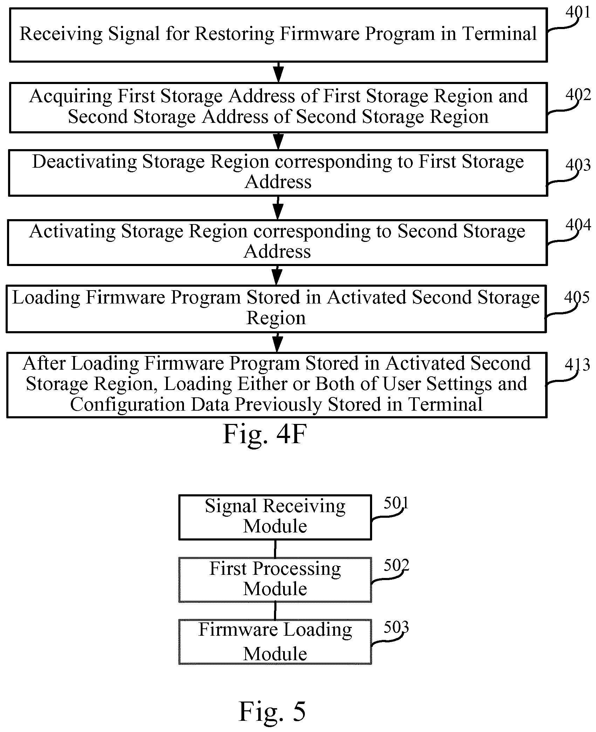

Fig. 4 is a flow chart illustrating a method for restoring a firmware program according to an exemplary embodiment. As shown in Fig. 4, in the present embodiment, the method for restoring a firmware program can be applied in the terminal 110 as shown in Fig. 1, for example. The method for restoring a firmware program can include the following steps.

In step 401, a restoring signal for restoring a firmware program in the terminal is received.

The user can trigger the terminal to restore the firmware program. Accordingly, the terminal receives a restoring signal for restoring the firmware program in the terminal. The terminal can be provided with a restoring key, and the user can send a restoring signal by pressing the restoring key. This is not limited in the present embodiment.

Optionally, when the firmware program in the terminal fails, the user can trigger the terminal to restore the firmware program.

Optionally, when the user dislikes the current version of the firmware program in the terminal, and desires to restore the firmware program to the previous version, the user can trigger the terminal to restore the firmware program.

In step 402, a first storage address of the first storage region and a second storage address of the second storage region are acquired.

Optionally, as shown in Fig. 4B, this step can include the following steps.

In step 402a, a partition table containing storage addresses of storage regions is retrieved.

After it receives the restoring signal, the terminal can retrieve a pre-stored partition table which contains storage addresses of storage regions.

In step 402b, the first storage address and the second storage address are determined based on the partition table.

The terminal derives the first storage address corresponding to the first storage region and the second storage address corresponding to the second storage region from the partition table.

Optionally, when there are two or more second storage regions, the terminal can derive two or more second storage addresses respectively corresponding to the second storage regions. This is not limited in the present embodiment.

In step 403, a storage region corresponding to the first storage address is deactivated.

After it receives the restoring signal, the terminal can deactivate a storage region corresponding to the first storage address.

Optionally, the terminal can set a state flag for each storage region, and the terminal can modify the flag of the storage region corresponding to the first storage address. For example, the terminal can set a flag of an activated storage region as "I", and set a flag of an inactivated storage region as "0". In this case, the terminal can modify the flag of the storage region corresponding to the first storage address as "0".

Optionally, the terminal can set a flag only for an activated storage region, and no flag for an inactivated storage region. In this case, the terminal can delete the flag of the storage region corresponding to the first storage address.

Optionally, the terminal can also set a flag only for an inactivated storage region, and no flag for an activated storage region. In this case, the terminal can set a flag for the storage region corresponding to the first storage address.

In the present embodiment, the above manners through which the terminal deactivates the storage region corresponding to the first storage address are only exemplary. Optionally, the terminal can deactivate the storage region corresponding to the first storage address through other manners, which is not limited in the present embodiment.

In step 404, a storage region corresponding to the second storage address is activated.

After it receives the restoring signal, the terminal can activate the storage region corresponding to the second storage address.

Optionally, the terminal can set a state flag for each storage region, and the terminal can modify the flag of the storage region corresponding to the second storage address. For example, the terminal can set a flag of an activated storage region as "1", and set a flag of an inactivated storage region as "0". In this case, the terminal can modify the flag of the storage region corresponding to the second storage address as "1".

Optionally, the terminal can set a flag only for an activated storage region, and no flag for an inactivated storage region. In this case, the terminal can set a flag for the storage region corresponding to the second storage address.

Optionally, the terminal can also set a flag only for an inactivated storage region, and no flag for an activated storage region. In this case, the terminal can delete the flag for the storage region corresponding to the second storage address.

In the present embodiment, the above manners through which the terminal activates the storage region corresponding to the second storage address are only exemplary. Optionally, the terminal can activate the storage region corresponding to the second storage address through other manners, which is not limited in the present embodiment.

Optionally, when there are two or more second storage regions, and two or more second storage addresses respectively corresponding to the second storage regions are acquired, this step can include the following steps, as shown in Fig. 4C.

In step 404a, one of the second storage addresses is selected according to a preset condition, the preset condition including at least one of: priority levels of the second storage regions respectively corresponding to the second storage addresses, intactness of firmware programs respectively stored in the second storage regions, and version numbers of the firmware programs respectively stored in the second storage regions.

The terminal can select one from the second storage addresses according to the preset condition.

Optionally, the terminal can set restoring priority levels respectively for the second storage regions, each representing a priority level of a second storage region in restoring of the firmware program. The terminal can select a second storage address having the highest priority level among the second storage addresses. For example, there are three second storage addresses A, B and C, with a restoring priority order B, A and C. In this case, the terminal can select the second storage address B.

Optionally, the terminal can also set check codes for the firmware programs stored in the storage regions corresponding to the second storage addresses. The terminal can determine whether a firmware program stored in a storage region corresponding to a second storage address is intact through its check code, and select a second storage address in which the firmware program is intact. Optionally, if there are two or more second storage addresses having intact firmware programs, the terminal can randomly select one of them, or select one based on the other two conditions. This is not limited in the present embodiment.

Optionally, the terminal can derive version numbers of the firmware programs stored in the storage regions corresponding to the second storage addresses, and select a second storage address to which a storage region with the higher version number corresponds.

In the above, as an example, the present condition includes one condition. However, optionally, two or three of the conditions combined can be set as the present condition. This is not limited in the present embodiment. Optionally, in the above embodiment, as an example, the present condition includes the three conditions. However, optionally, the preset condition can also include other conditions. This is not limited in the present embodiment.

In step 404b, a second storage region corresponding to the selected second storage address is activated.

After it selects one second storage address form the two or more second storage addresses, the terminal can activate a second storage region corresponding to the selected second storage address.

Optionally, the terminal can activate the second storage region corresponding to the selected second storage address through a similar manner as described above. This is not limited in the present embodiment.

In step 405, the firmware program stored in the activated second storage region is loaded.

The terminal can load the firmware program stored in the activated second storage region.

Optionally, the terminal can load the firmware program stored in the activated second storage region during a reboot process.

Optionally, after it deactivates the first storage region and activates the second storage region, the terminal can be rebooted automatically, and load the firmware program stored in the activated second storage region during the reboot process.

Optionally, after it deactivates the first storage region and activates the second storage region, the terminal can present a prompt message to the user to reboot it. Then, the terminal can be rebooted under trigger of the user, and load the firmware program stored in the activated second storage region during the reboot process.

Accordingly, in the method for restoring a firmware program provided in the embodiment of the present disclosure, an activated first storage region for storing a firmware program most recently executed by the terminal and an inactivated second storage region for storing a back-up firmware program are provided in a terminal. Thereby, in order to restore a firmware program as desired, the terminal can simply deactivate the first storage region, activate the second storage region, and load the back-up firmware program stored in the activated second storage region. Thus, it can solve the problem in the related art that a firmware program can be restored only by a flash tool, and it can achieve an effect of restoring a firmware program with one key and facilitating operation of the user.

In the present embodiment, the user can restore the firmware program in the terminal with one key, thus saving time for the user in restoring the firmware program.

It should be noted that, the user can also trigger updating of the firmware program stored in the terminal. As shown in Fig. 4D, the process of the terminal updating the firmware program can include the following steps.

In step 406, a request for acquiring an up-to-date firmware program of the terminal is sent to a server.

Optionally, the user can find a wanted version of firmware program on a website, and operate the terminal to download the up-to-date firmware program. The terminal can send to the server a request for acquiring an up-to-date firmware program of the terminal.

In step 407, the up-to-date firmware program returned by the server is received.

In step 408, states of the first storage region and the second storage region are determined.

Optionally, the terminal can retrieve the state flags of the first storage region and the second storage region, and determine the states of the first storage region and the second storage region based on the state flags.

In step 409, if the first storage region is activated and the second storage region is inactivated, a firmware program stored in the inactivated second storage region is updated with the up-to-date firmware program; the first storage region is deactivated and the second storage region is activated.

If it determines that the first storage region is activated and the second storage region is inactivated, the terminal can update the firmware program stored in the second storage region with the up-to-date firmware program. Optionally, the terminal can delete the firmware program stored in the second storage region and write the received up-to-date firmware program to the second storage region.

In order to run the updated firmware program, the terminal can deactivate the first storage region and activate the second storage region, the process of which can be referred to the steps 402-404 and will not be repeated herein.

Optionally, after it activates the second storage region, the terminal can load the firmware program stored in the activated second storage region.

In step 410, if the second storage region is activated and the first storage region is inactivated, a firmware program stored in the inactivated first storage region is updated with the up-to-date firmware program; the second storage region is deactivated and the first storage region is activated.

If it determines that the second storage region is activated and the first storage region is inactivated, the terminal can update the firmware program stored in the inactivated first storage region with the up-to-date firmware program. Then the second storage region is deactivated and the first storage region is activated, the process of which is similar to step 409 and will not be repeated herein.

It should be noted that, in the present embodiment, as an example, the terminal only updates a firmware program stored in an inactivated storage region. However, optionally, the terminal can also update the firmware programs stored in both of the storage regions. This is not limited in the present embodiment. In the present embodiment, as an example, the terminal only updates a firmware program stored in an inactivated storage region, to ensure that the terminal can operate continuously during the update of the firmware program. The specific implementation is not limited.

It should be further noted that, as shown in Fig. 4E, the method for restoring a firmware program also includes the following steps.

In step 411, the firmware program stored in the deactivated first storage region is deleted.

The terminal restoring the firmware program is normally caused by a failure in the firmware program which is most recently executed, that is, damage of the firmware program stored in the first storage region. Thus, after it deactivates the first storage region, the terminal can delete the firmware program stored in the deactivated first storage region, that is, delete the damaged firmware program.

In step 412, the firmware program stored in the activated second storage region is written to the deactivated first storage region.

In order to restore the damaged firmware program stored in the deactivated first storage region, the terminal can write the firmware program stored in the activated second storage region to the deactivated first storage region.

Optionally, the terminal can present a prompt message to the user prompting to back up the firmware program stored in the second storage region to the first storage region as. After he sees the prompt message, the user can trigger the back up.

Optionally, after it deactivates the first storage region and activates the second storage region, the terminal can automatically write the firmware program stored in the activated second storage region to the deactivated first storage region. Thus, even if the firmware program in the activated second storage region fails again, the user can still restore the firmware program with the back-up firmware program in the deactivated first storage region. This is not limited in the present embodiment.

It should be noted that, in the present embodiment, as an example, the firmware program stored in the activated second storage region is written to the deactivated first storage region. However, optionally, the user can also connect the terminal to a flash tool or a U disk, to restore the damaged firmware program stored in the deactivated first storage region by the flash tool or the U disk. This is not limited in the present embodiment. Optionally, the terminal can also be connected to a server, and download a firmware program from the server to restore the firmware program stored in the deactivated first storage region. This is not limited in the present embodiment.

It should be further noted that, as shown in Fig. 4F, after step 405, the terminal can also perform the following step.

In step 413, either or both of user settings and configuration data previously stored in the terminal is loaded.

During operation of the terminal, either or both of user settings and configuration data configured by the user for the terminal can be saved in the terminal. Optionally, the terminal can automatically perform saving at a predetermined time interval, or can perform saving every time it receives a trigger signal from the user. This is not limited in the present embodiment.

After it loads the firmware program stored in the activated second storage region, the terminal can further load either or both of the user settings and the configuration data previously stored in the terminal. Thereby, even if the terminal restores the firmware program, the user can still employ the user settings before the restoration of the firmware program and does not need to perform complex setting operations again. It can reduce complexity of user operation, and ensure data security of the configuration data in the terminal during the restoration of the firmware program.

The following are device embodiments of the present disclosure, which may be configured to perform the method embodiments of the present disclosure. For details that are not disclosed in the device embodiments of the present disclosure, reference may be made to the method embodiments of the present disclosure.

Fig. 5 is a block diagram illustrating a device for restoring a firmware program according to an exemplary embodiment. As shown in Fig. 5, the device for restoring a firmware program is applied in the terminal 110 in the implementation environment as shown in Fig. 1. The device for restoring a firmware program can include but not limited to a signal receiving module 501, a first processing module 502 and a firmware loading module 503.

The signal receiving module 501 is configured to receive a restoring signal for restoring a firmware program in the terminal;
the first processing module 502 is configured to deactivate the first storage region and activate the second storage region; and
the firmware loading module 503 is configured to load the firmware program stored in the activated second storage region.

Accordingly, in the device for restoring a firmware program provided in the embodiment of the present disclosure, an activated first storage region for storing a firmware program most recently executed by the terminal and an inactivated second storage region for storing a back-up firmware program are provided in a terminal. Thereby, in order to restore a firmware program as desired, the terminal can simply deactivate the first storage region, activate the second storage region, and load the back-up firmware program stored in the activated second storage region. Thus, it can solve the problem in the related art that a firmware program can be restored only by a flash tool, and it can achieve an effect of restoring a firmware program with one key and facilitating operation of the user.

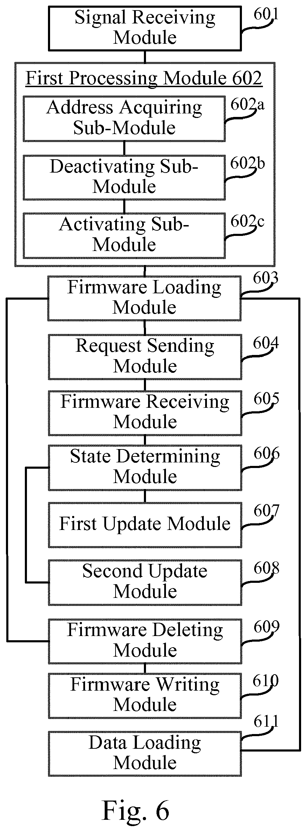

Fig. 6 is a block diagram illustrating a device for restoring a firmware program according to an exemplary embodiment. As shown in Fig. 6, the device for restoring a firmware program is applied in the terminal 110 in the implementation environment as shown in Fig. 1. The device for restoring a firmware program can include but not limited to a signal receiving module 601, a first processing module 602 and a firmware loading module 603.

The signal receiving module 601 is configured to receive a restoring signal for restoring a firmware program in the terminal;
the first processing module 602 is configured to deactivate the first storage region and activate the second storage region; and
the firmware loading module 603 is configured to load the firmware program stored in the activated second storage region.

Optionally, the first processing module 602 includes:
an address acquiring sub-module 602a configured to acquire a first storage address of the first storage region and a second storage address of the second storage region;
a deactivating sub-module 602b configured to deactivate a storage region corresponding to the first storage address; and
an activating sub-module 602c configured to activate a storage region corresponding to the second storage address.

Optionally, the address acquiring sub-module 602a is configured to:
retrieve a partition table containing storage addresses of storage regions; and
determine the first storage address and the second storage address based on the partition table.

Optionally, the activating sub-module 602c is configured to:
when there are two or more second storage addresses, select one of the second storage addresses according to a preset condition, the preset condition including at least one of: priority levels of the second storage regions respectively corresponding to the second storage addresses, intactness of firmware programs respectively stored in the second storage regions, and version numbers of the firmware programs respectively stored in the second storage regions; and
activate a second storage region corresponding to the selected second storage address.

Optionally, the device further includes:
a request sending module 604 configured to send to a server a request for acquiring an up-to-date firmware program of the terminal;
a firmware receiving module 605 configured to receive the up-to-date firmware program returned by the server;
a state determining module 606 configured to determine states of the first storage region and the second storage region;
a first update module 607 configured to, if the first storage region is activated and the second storage region is inactivated, update a firmware program stored in the inactivated second storage region with the up-to-date firmware program received by the firmware receiving module; deactivate the first storage region and activate the second storage region; and
a second update module 608 configured to, if the second storage region is activated and the first storage region is inactivated, update a firmware program stored in the inactivated first storage region with the up-to-date firmware program; deactivate the second storage region and activate the first storage region.

Optionally, the device further includes:
a firmware deleting module 609 configured to delete the firmware program stored in the deactivated first storage region; and
a firmware writing module 610 configured to write the firmware program stored in the activated second storage region to the deactivated first storage region.

Optionally, the device further includes:
a data loading module 611 configured to, after the firmware program stored in the activated second storage region is loaded, load either or both of user settings and configuration data previously stored in the terminal.

Accordingly, in the device for restoring a firmware program provided in the embodiment of the present disclosure, an activated first storage region for storing a firmware program most recently executed by the terminal and an inactivated second storage region for storing a back-up firmware program are provided in a terminal. Thereby, in order to restore a firmware program as desired, the terminal can simply deactivate the first storage region, activate the second storage region, and load the back-up firmware program stored in the activated second storage region. Thus, it can solve the problem in the related art that a firmware program can be restored only by a flash tool, and it can achieve an effect of restoring a firmware program with one key and facilitating operation of the user.

In addition, in the present embodiment, the firmware program stored in the second storage region can be updated with an up-to-date firmware program, and thus it can achieve an effect of updating the firmware program in the terminal. Moreover, in the present embodiment, only the firmware program stored in the second storage region is updated, and the firmware program stored in the first storage region which is being currently executed is not updated, and thus it can ensure that the terminal can operate continuously during the update of the firmware program.

Further, in the present embodiment, the firmware program stored in the activated second storage region is written to the deactivated first storage region. Thereby, even if the firmware program in the activated second storage region fails again, the user can still restore the firmware program with the back-up firmware program in the deactivated first storage region.

With respect to the devices in the above embodiments, the specific manners for performing operations for individual modules therein have been described in detail in the methods embodiments, which will not be elaborated herein.

After it loads the firmware program stored in the activated second storage region, the terminal can further load either or both of the user settings and the configuration data previously stored in the terminal. Thereby, after the firmware program is restored, the user does not need to perform complex setting operations. It can reduce complexity of user operation, and ensure data security of the configuration data in the terminal during the restoration of the firmware program.

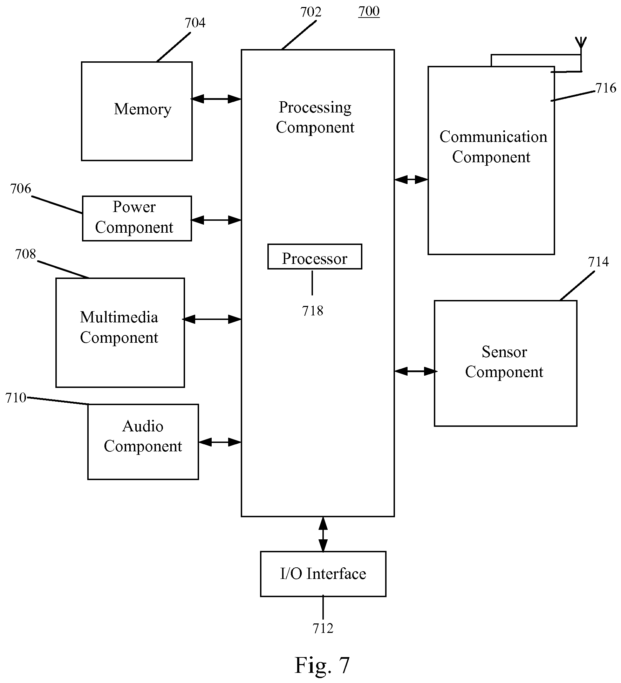

Fig. 7 is a block diagram of a device 700 for restoring a firmware program according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 718 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 718 in the device 700, for performing the above-described methods. For example, the non-transitory computer-readable storage medium may be a ROM, a RAM, a CD-ROM, a magnetic tape, a floppy disc, an optical data storage device, and the like.

## Claims

1. A method for restoring a firmware program in a terminal (110) having an activated first storage region (210) for storing a firmware program most recently executed by the terminal (110) and an inactivated second storage region (220) for storing a back-up firmware program, the method comprising:
upon receiving (301, 401) a restoring signal for restoring a firmware program in the terminal (110):
deactivating (302) the first storage region (210) and activating the second storage region (220); and
loading (303, 405) the firmware program stored in the activated second storage region (220);
wherein the method further comprises:
sending (406) to a server (120) a request for acquiring an up-to-date firmware program of the terminal (110);
receiving (407) the up-to-date firmware program returned by the server (120);
determining (408) states of the first storage region (210) and the second storage region (220);
if the first storage region (210) is activated and the second storage region (220) is inactivated, updating (409) a firmware program stored in the inactivated second storage (220) region with the up-to-date firmware program; deactivating (409) the first storage region (210) and activating the second storage region (220), without updating the firmware program stored in the first storage region; and
if the second storage region (220) is activated and the first storage region (210) is inactivated, updating (410) a firmware program stored in the inactivated first storage region (210) with the up-to-date firmware program; deactivating (410) the second storage region (220) and activating the first storage region (210), without updating the firmware program stored in the second storage region;
wherein deactivating (302) the first storage region (210) and activating the second storage region (220) comprises:
acquiring (402) a first storage address of the first storage region (210) and a second storage address of the second storage region (220);
deactivating (403) the storage region corresponding to the first storage address; and
activating (404) the storage region corresponding to the second storage address;
wherein activating (404) the storage region corresponding to the second storage address comprises:
when there are two or more second storage addresses, selecting (404a) one of the second storage addresses according to a preset condition, the preset condition comprising at least one of: priority levels of the second storage regions respectively corresponding to the second storage addresses, intactness of firmware programs respectively stored in the second storage regions, and version numbers of the firmware programs respectively stored in the second storage regions; and
activating (404b) a second storage region corresponding to the selected second storage address.

2. The method of claim 1, wherein acquiring (402) a first storage address of the first storage region (210) and a second storage address of the second storage region (220) comprises:
retrieving (402a) a partition table containing storage addresses of storage regions; and
determining (402b) the first storage address and the second storage address based on the partition table.

3. A device for restoring a firmware program in a terminal (110) having an activated first storage region (210) for storing a firmware program most recently executed by the terminal (110) and an inactivated second storage region (220) for storing a back-up firmware program, the device comprising:
a signal receiving module (501, 601) configured to receive a restoring signal for restoring a firmware program in the terminal (110);
a first processing module (502, 602) configured to deactivate the first storage region (210) and activate the second storage region (220); and
a firmware loading module (503, 603) configured to load the firmware program stored in the activated second storage region (220);
wherein the device further comprises:
a request sending module (604) configured to send to a server (120) a request for acquiring an up-to-date firmware program of the terminal (110);
a firmware receiving module (605) configured to receive the up-to-date firmware program returned by the server (120);
a state determining module (606) configured to determine states of the first storage region (210) and the second storage region (220);
a first update module (607) configured to, if the first storage region (210) is activated and the second storage region (220) is inactivated, update a firmware program stored in the inactivated second storage region (220) with the up-to-date firmware program received by the firmware receiving module (605); deactivate the first storage region (210) and activate the second storage region (220), without updating the firmware program stored in the first storage region; and
a second update module (608) configured to, if the second storage region (220) is activated and the first storage region (210) is inactivated, update a firmware program stored in the inactivated first storage region (210) with the up-to-date firmware program; deactivate the second storage region (220) and activate the first storage region (210), without updating the firmware program stored in the second storage region;
wherein the first processing module (502, 602) comprises:
an address acquiring sub-module (602a) configured to acquire a first storage address of the first storage region (210) and a second storage address of the second storage region (220);
a deactivating sub-module (602b) configured to deactivate the storage region corresponding to the first storage address; and
an activating sub-module (602c) configured to activate the storage region corresponding to the second storage address;
wherein the activating sub-module (602c) is configured to:
when there are two or more second storage addresses, select one of the second storage addresses according to a preset condition, the preset condition comprising at least one of: priority levels of the second storage regions respectively corresponding to the second storage addresses, intactness of firmware programs respectively stored in the second storage regions, and version numbers of the firmware programs respectively stored in the second storage regions; and
activate the second storage region corresponding to the selected second storage address.

4. The device of claim 3, wherein the address acquiring sub-module (602a) is configured to:
retrieve a partition table containing storage addresses of storage regions; and
determine the first storage address and the second storage address based on the partition table.

5. A terminal (110) comprising an activated first storage region (210) for storing a firmware program most recently executed by the terminal (110) and an inactivated second storage region (220) for storing a back-up firmware program, the terminal (110) further comprising :
a processor; and
a memory for storing instructions executable by the processor;
wherein the instructions, when executed, cause the processor to perform the method of any of claims 1 or 2.

## Patentansprüche

1. Verfahren zur Wiederherstellung eines Firmware-Programms in einem Endgerät (110), das eine aktivierte erste Speicherregion (210) zum Speichern eines Firmware-Programms, das von dem Endgerät (110) zuletzt ausgeführt wurde, und eine inaktivierte zweite Speicherregion (220) zum Speichern eines Sicherungs-Firmware-Programms hat, wobei das Verfahren Folgendes aufweist:
bei Empfangen (301, 401) eines Wiederherstellungssignals zum Wiederherstellen eines Firmware-Programms in dem Endgerät (110) :
Deaktivieren (302) der ersten Speicherregion (210) und Aktivieren der zweiten Speicherregion (220) und
Laden (303, 405) des in der aktivierten zweiten Speicherregion (220) gespeicherten Firmware-Programms;
wobei das Verfahren ferner Folgendes aufweist:
Senden (406) einer Anfrage zum Erlangen eines aktuellen Firmware-Programms des Endgeräts (110) an einen Server (120);
Empfangen (407) des vom Server (120) als Antwort gesendeten aktuellen Firmware-Programms;
Bestimmen (408) von Zuständen der ersten Speicherregion (210) und der zweiten Speicherregion (220);
falls die erste Speicherregion (210) aktiviert ist und die zweite Speicherregion (220) inaktiviert ist, Aktualisieren (409) eines in der inaktivierten zweiten Speicherregion (220) gespeicherten Firmware-Programms mit dem aktuellen Firmware-Programm; Deaktivieren (409) der ersten Speicherregion (210) und Aktivieren der zweiten Speicherregion (220), ohne das in der ersten Speicherregion gespeicherte Firmware-Programm zu aktualisieren; und
falls die zweite Speicherregion (220) aktiviert ist und die erste Speicherregion (210) inaktiviert ist, Aktualisieren (410) eines in der inaktivierten ersten Speicherregion (210) gespeicherten Firmware-Programms mit dem aktuellen Firmware-Programm; Deaktivieren (410) der zweiten Speicherregion (210) und Aktivieren der ersten Speicherregion (210), ohne das in der zweiten Speicherregion gespeicherte Firmware-Programm zu aktualisieren; und
wobei das Deaktivieren (302) der ersten Speicherregion (210) und das Aktivieren der zweiten Speicherregion (220) Folgendes aufweist:
Erlangen (402) einer ersten Speicheradresse der ersten Speicherregion (210) und einer zweiten Speicheradresse der zweiten Speicherregion (220);
Deaktivieren (403) der der ersten Speicheradresse entsprechenden Speicherregion und
Aktivieren (404) der der zweiten Speicheradresse entsprechenden Speicherregion;
wobei das Aktivieren (404) der der zweiten Speicheradresse entsprechenden Speicherregion Folgendes aufweist:
wenn es zwei oder mehr zweite Speicheradressen gibt, Auswählen (404a) von einer der zweiten Speicheradressen gemäß einer vorgegebenen Bedingung, wobei die vorgegebene Bedingung wenigstens eine der folgenden aufweist: Prioritätsniveaus der zweiten Speicherregionen, die den jeweiligen zweiten Speicheradressen entsprechen, Intaktheit von Firmware-Programmen, die jeweils in den zweiten Speicherregionen gespeichert werden, und Versionsnummern der Firmware-Programme, die jeweils in den zweiten Speicherregionen gespeichert werden; und
Aktivieren (404b) einer zweiten Speicherregion, die der ausgewählten zweiten Speicheradresse entspricht.

2. Verfahren nach Anspruch 1, wobei das Erlangen (402) einer ersten Speicheradresse der ersten Speicherregion (210) und einer zweiten Speicheradresse der zweiten Speicherregion (220) Folgendes aufweist:
Abrufen (402a) einer Speicheradressen von Speicherregionen enthaltenden Partitionstabelle; und
Bestimmen (402b) der ersten Speicheradresse und der zweiten Speicheradresse auf Basis der Partitionstabelle.

3. Vorrichtung zum Wiederherstellen eines Firmware-Programms in einem Endgerät (110), das eine aktivierte erste Speicherregion (210) zum Speichern eines Firmware-Programms, das von dem Endgerät (110) zuletzt ausgeführt wurde, und eine inaktivierte zweite Speicherregion (220) zum Speichern eines Sicherungs-Firmware-Programms hat, wobei die Vorrichtung Folgendes aufweist:
ein Signalempfangsmodul (501, 601), das zum Empfangen eines Wiederherstellungssignals zum Wiederherstellen eines Firmware-Programms in dem Endgerät (110) konfiguriert ist;
ein erstes Verarbeitungsmodul (502, 602), das zum Deaktivieren der ersten Speicherregion (210) und Aktivieren der zweiten Speicherregion (220) konfiguriert ist; und
ein Firmware-Lademodul (503, 603), das zum Laden des in der aktivierten zweiten Speicherregion (220) gespeicherten Firmware-Programms konfiguriert ist;
wobei die Vorrichtung ferner Folgendes aufweist:
ein Anfragesendemodul (604), das zum Senden einer Anfrage zum Erlangen eines aktuellen Firmware-Programms des Endgeräts (110) an einen Server (120) konfiguriert ist;
ein Firmware-Empfangsmodul (605), das zum Empfangen des vom Server (120) als Antwort gesendeten aktuellen Firmware-Programms konfiguriert ist;
ein Zustandsbestimmungsmodul (606), das zum Bestimmen von Zuständen der ersten Speicherregion (210) und der zweiten Speicherregion (220) konfiguriert ist;
ein erstes Aktualisierungsmodul (607), das, falls die erste Speicherregion (210) aktiviert ist und die zweite Speicherregion (220) inaktiviert ist, zum Aktualisieren eines in der inaktivierten zweiten Speicherregion (220) gespeicherten Firmware-Programms mit dem durch das Firmware-Empfangsmodul (605) empfangenen aktuellen Firmware-Programm; Deaktivieren der ersten Speicherregion (210) und Aktivieren der zweiten Speicherregion (220), ohne das in der ersten Speicherregion gespeicherte Firmware-Programm zu aktualisieren, konfiguriert ist; und
ein zweites Aktualisierungsmodul (608), das, falls die zweite Speicherregion (220) aktiviert ist und die erste Speicherregion (210) inaktiviert ist, zum Aktualisieren eines in der inaktivierten ersten Speicherregion (210) gespeicherten Firmware-Programms mit dem aktuellen Firmware-Programm; Deaktivieren der zweiten Speicherregion (210) und Aktivieren der ersten Speicherregion (210), ohne das in der zweiten Speicherregion gespeicherte Firmware-Programm zu aktualisieren, konfiguriert ist;
wobei das erste Verarbeitungsmodul (502, 602) Folgendes aufweist:
ein Adressenerlangungsuntermodul (602a), das zum Erlangen einer ersten Speicheradresse der ersten Speicherregion (210) und einer zweiten Speicheradresse der zweiten Speicherregion (220) konfiguriert ist;
ein Deaktivierungsuntermodul (602b), das zum Deaktivieren der der ersten Speicheradresse entsprechenden Speicherregion konfiguriert ist; und
ein Aktivierungsuntermodul (602c), das zum Aktivieren der der zweiten Speicheradresse entsprechenden Speicherregion konfiguriert ist;
wobei das Aktivierungsuntermodul (602c) konfiguriert ist zum:
wenn es zwei oder mehr zweite Speicheradressen gibt, Auswählen von einer der zweiten Speicheradressen gemäß einer vorgegebenen Bedingung, wobei die vorgegebene Bedingung wenigstens eine der folgenden aufweist: Prioritätsniveaus der zweiten Speicherregionen, die den jeweiligen zweiten Speicheradressen entsprechen, Intaktheit von Firmware-Programmen, die jeweils in den zweiten Speicherregionen gespeichert werden, und Versionsnummern der Firmware-Programme, die jeweils in den zweiten Speicherregionen gespeichert werden; und
Aktivieren der zweiten Speicherregion, die der ausgewählten zweiten Speicheradresse entspricht.

4. Vorrichtung nach Anspruch 3, wobei das Adressenerlangungsuntermodul (602a) konfiguriert ist zum:
Abrufen einer Speicheradressen von Speicherregionen enthaltenden Partitionstabelle; und
Bestimmen der ersten Speicheradresse und der zweiten Speicheradresse auf Basis der Partitionstabelle.

5. Endgerät (110), das eine aktivierte erste Speicherregion (210) zum Speichern eines Firmware-Programms, das von dem Endgerät (110) zuletzt ausgeführt wurde, und eine inaktivierte zweite Speicherregion (220) zum Speichern eines Sicherungs-Firmware-Programms aufweist, wobei das Endgerät (110) ferner Folgendes aufweist:
einen Prozessor und
einen Speicher zum Speichern von durch den Prozessor ausführbaren Befehlen;
wobei die Befehle bei Ausführung den Prozessor zum Durchführen des Verfahrens nach einem der Ansprüche 1 oder 2 veranlassen.

## Revendications

1. Procédé de restauration d'un programme de micrologiciel dans un terminal (110) présentant une première région de mémorisation activée (210) pour mémoriser un programme de micrologiciel le plus récemment exécuté par le terminal (110) et une seconde région de mémorisation inactivée (220) pour mémoriser un programme de micrologiciel de secours, le procédé comprenant :
à la réception (301, 401) d'un signal de restauration pour restaurer un programme de micrologiciel dans le terminal (110) :
la désactivation (302) de la première région de mémorisation (210) et l'activation de la seconde région de mémorisation (220) ; et
le chargement (303, 405) du programme de micrologiciel mémorisé dans la seconde région de mémorisation activée (220) ;
le procédé comprenant en outre :
l'envoi (406) à un serveur (120) d'une demande d'acquisition d'un programme de micrologiciel actualisé du terminal (110) ;
la réception (407) du programme de micrologiciel actualisé renvoyé par le serveur (120) ;
la détermination (408) d'états de la première région de mémorisation (210) et de la seconde région de mémorisation (220) ;
si la première région de mémorisation (210) est activée et la seconde région de mémorisation (220) est inactivée, l'actualisation (409) d'un programme de micrologiciel mémorisé dans la seconde région de mémorisation inactivée (220) avec le programme de micrologiciel actualisé ; la désactivation (409) de la première région de mémorisation (210) et l'activation de la seconde région de mémorisation (220), sans actualiser le programme de micrologiciel mémorisé dans la première région de mémorisation ; et
si la seconde région de mémorisation (220) est activée et la première région de mémorisation (210) est inactivée, l'actualisation (410) d'un programme de micrologiciel mémorisé dans la première région de mémorisation activée (210) avec le programme de micrologiciel actualisé ; la désactivation (410) de la seconde région de mémorisation (220) et l'activation de la première région de mémorisation (210), sans actualiser le programme de micrologiciel mémorisé dans la seconde région de mémorisation ;
dans lequel la désactivation (302) de la première région de mémorisation (210) et l'activation de la seconde région de mémorisation (220) comprend :
l'acquisition (402) d'une première adresse de mémorisation de la première région de mémorisation (210) et d'une seconde adresse de mémorisation de la seconde région de mémorisation (220) ;
la désactivation (403) de la région de mémorisation correspondant à la première adresse de mémorisation ; et
l'activation (404) de la région de mémorisation correspondant à la seconde adresse de mémorisation ;
dans lequel l'activation (404) de la région de mémorisation correspondant à la seconde adresse de mémorisation comprend :
quand il existe deux ou plusieurs secondes adresses de mémorisation, la sélection (404a) d'une des secondes adresses de mémorisation conformément à une condition prédéfinie, la condition prédéfinie comprenant au moins une des conditions suivantes : niveaux de priorité des secondes régions de mémorisation correspondant respectivement aux secondes adresses de mémorisation, nature intacte des programmes de micrologiciel respectivement mémorisés dans les secondes régions de mémorisation, et numéros de version des programmes de micrologiciel respectivement mémorisés dans les secondes régions de mémorisation ; et l'activation (404b) d'une seconde région de stockage correspondant à la seconde adresse de mémorisation sélectionnée.

2. Procédé selon la revendication 1, dans lequel l'acquisition (402) d'une première adresse de mémorisation de la première région de mémorisation (210) et d'une seconde adresse de mémorisation de la seconde région de mémorisation (220) comprend :
le recouvrement (402a) d'une table de partitions contenant les adresses de mémorisation de régions de mémorisation ; et
la détermination (402b) de la première adresse de mémorisation et de la seconde adresse de mémorisation en fonction de la table de partitions.

3. Dispositif de restauration d'un programme de micrologiciel dans un terminal (110) présentant une première région de mémorisation activée (210) pour mémoriser un programme de micrologiciel le plus récemment exécuté par le terminal (110) et une seconde région de mémorisation inactivée (220) pour mémoriser un programme de micrologiciel de secours, le dispositif comprenant :
un module de réception de signaux (501,601) configuré pour recevoir un signal de restauration pour restaurer un programme de micrologiciel dans le terminal (110) ;
un premier module de traitement (502, 602) configuré pour désactiver la première région de mémorisation (210) et activer la seconde région de mémorisation (220) ; et
un module de chargement de micrologiciel (503, 603) configuré pour charger le programme de micrologiciel mémorisé dans la seconde région de mémorisation activée (220) ;
le dispositif comprenant en outre :
un module d'envoi de demande (604) configuré pour envoyer à un serveur (120) une demande d'acquisition d'un programme de micrologiciel actualisé du terminal (110) ;
un module de réception de micrologiciel (605) configuré pour recevoir le programme de micrologiciel actualisé renvoyé par le serveur (120) ;
un module de détermination d'état (606) configuré pour déterminer des états de la première région de mémorisation (210) et de la seconde région de mémorisation (220) ;
un premier module d'actualisation (607) configuré pour, si la première région de mémorisation (210) est activée et la seconde région de mémorisation (220) est inactivée, actualiser un programme de micrologiciel mémorisé dans la seconde région de mémorisation inactivée (220) avec le programme de micrologiciel actualisé reçu par le module de réception de micrologiciel (605) ; désactiver la première région de mémorisation (210) et activer la seconde région de mémorisation (220), sans actualiser le programme de micrologiciel mémorisé dans la première région de mémorisation ; et
un second module d'actualisation (608) configuré pour, si la seconde région de mémorisation (220) est activée et la première région de mémorisation (210) est inactivée, actualiser un programme de micrologiciel mémorisé dans la première région de mémorisation activée (210) avec le programme de micrologiciel actualisé ;
désactiver la seconde région de mémorisation (220) et activer la première région de mémorisation (210), sans actualiser le programme de micrologiciel mémorisé dans la seconde région de mémorisation ;
dans lequel le premier module de traitement (502, 602) comprend :
un sous-module d'acquisition d'adresse (602a) configuré pour acquérir une première adresse de mémorisation de la première région de mémorisation (210) et une seconde adresse de mémorisation de la seconde région de mémorisation (220) ;
un sous-module de désactivation (602b) configuré pour désactiver la région de mémorisation correspondant à la première adresse de mémorisation ; et
un sous-module d'activation (602c) configuré pour activer la région de mémorisation correspondant à la seconde adresse de mémorisation ;
dans lequel le sous-module d'activation (602c) est configuré pour :
quand il existe deux ou plusieurs secondes adresses de mémorisation, sélectionner une des secondes adresses de mémorisation conformément à une condition prédéfinie, la condition prédéfinie comprenant au moins une des conditions suivantes : niveaux de priorité des secondes régions de mémorisation correspondant respectivement aux secondes adresses de mémorisation, nature intacte des programmes de micrologiciel respectivement mémorisés dans les secondes régions de mémorisation, et numéros de version des programmes de micrologiciel respectivement mémorisés dans les secondes régions de mémorisation ; et
activer la seconde région de stockage correspondant à la seconde adresse de mémorisation sélectionnée.

4. Dispositif selon la revendication 3, dans lequel le sous-module d'acquisition d'adresse (602a) est configuré pour :
recouvrer une table de partitions contenant des adresses de mémorisation de régions de mémorisation ; et
déterminer la première adresse de mémorisation et la seconde adresse de mémorisation en fonction de la table de partitions.

5. Terminal (110) comprenant une première région de mémorisation activée (210) pour mémoriser un programme de micrologiciel le plus récemment exécuté par le terminal (110) et une seconde région de mémorisation inactivée (220) pour mémoriser un programme de micrologiciel de secours, le terminal (110) comprenant en outre :
un processeur ; et
une mémoire pour mémoriser des instructions exécutables par le processeur ;
dans lequel les instructions, à leur exécution, amènent le processeur à réaliser le procédé selon l'une quelconque des revendications 1 ou 2.
